# EUROPEAN PATENT APPLICATION

(11) **EP 0 690 626 A2**
(43) Date of publication of application: **03.01.1996**
(21) Application number: 95304280.1
(22) Date of filing: 20.06.1995
(51) Int. Cl.: H04N 7/173

(54) **System for storage and playback of segmented video data**

(30) Priority: 30.06.1994 US 269233
(71) Applicant: AT&T Corp., New York, NY 10013-2412 (US)
(72) Inventor: Curtin, Craig Steven, Naperville, Illinois 60563 (US); Leung, Wu-Hon Francis, Downers Grove, Illinois 60515 (US); Mai, Khanh, Batavia, Illinois 60510 (US); Milleville, Jonathan David, Wheaton, Illinois 60187 (US); Ruan, Zuwang, Wheaton, Illinois 60187 (US)
(74) Representative: Buckley, Christopher Simon Thirsk

(57) **Abstract**

A system and method for storing and delivering digitized video items which decomposes the video titles into predefined segments. The segments are stored in groups which may be in different media or different parts of a single media, and each segment may be stored singly or multiply. Logic is embedded into the system which controls playback of the segments in any of a number of ways. This creates flexibility not present in existing systems, permits multiple playbacks of the same title without undue duplication of storage, permits real-time playback even when a title is being played, and enhances reliability of the system. The system configuration also reduces the required storage, especially for variants of titles, and allows the creation of special versions by selective insertion and deletion of segments.

## Description

### Technical Field

This invention relates to the field of digitized video storage and playback, and more particularly to video systems having high capacity storage with the capability of providing multiple numbers of diverse video output streams on demand.

### Background of the Invention

Cable TV and video cassettes have provided consumers with in-home movies and other audio-visual programming, hereinafter sometimes referred to as video items, programmatic material, or titles. Availability of cable, satellite, telephone lines, and other transmission facilities will expand delivery of video items on demand (VOD) and enhanced pay-per-view (EPPV). VOD is generally one subscriber watching one program wherein the customer may have the capability to pause, rewind, fast-forward, or stop the program, just like with a video tape player. EPPV is generally a movie or other program that starts at a specific time and multiple subscribers watch at the same time. Such services as VOD and EPPV require massive storage of a large number of titles and the ability to play them to the requesting customer at the time of the request. Current systems use video tape as the storage medium and when a request for a particular title is received, the tape is loaded into a cassette player which is then connected to the transmission facility for delivery to the customer. The use of tapes requires significant manual activity or the use of unreliable mechanical devices and limits the number of titles which can be made available. While it is possible to interconnect many customers to the output of a single player, it is not possible to use the same tape for another showing of the same title until the tape is fully played and rewound. Furthermore, tape storage is subject to degradation in quality and tape players suffer mechanical failure.

An alternative to tape storage of video titles is digital storage. Digitized video titles are stored in any of a variety of storage media such as disks; on demand, a selected title is accessed and read out for transmission to the distribution facility. In accordance with current standards, the MPEG-2 transport stream format for digitized packets is a preferred format for storing and transmitting the video data. A standard two-hour movie, for example, contains about 4 gigabytes of data (given current compression techniques at approximately 3MBps) when stored in this format, which may be stored on a single disk. Use of digital disk storage provides better quality than cassette storage and addressable access provides for multiple simultaneous plays from different parts and eliminates the inconvenience caused by the loading of cassette players.

Digitized storage alone does not, however, satisfy all the needs of a full capacity, on-demand system. Storage of a large library of titles is extremely expensive and control of access and playback is complex. To provide video on demand, especially of a popular title, many copies must be stored. Much like video cassette players, digital readout of large content data is sequential and, even though multiple readouts can be performed more or less simultaneously, there are bandwidth and control limits which prevent more than a few simultaneous accesses to the same title. Further, many situations exist where variants of the same title are required for different customers, such as, for example, a "PG" rated version of an "R" rated movie. These two versions are, for storage purposes, two separate titles.

It is an object of the present invention to provide a large library of digitized video titles which can be accessed on a real-time basis.

It is a further object to provide this large library with a minimum of storage space.

It is a further object to maintain high reliability so that particularly important ones of the video items are available at all times and are free from system failure.

It is a further object to be able to effectively place video titles onto parallel storage units to meet customer demands.

### Summary of the Invention

These objects and others are satisfied and a technical advance is achieved in the art by a system and method for storing and delivering digitized video content which decomposes the video titles into predefined segments. The segments are stored in groups which may be in different media or different parts of a single medium, and each segment may be stored singly or multiply. Logic is embedded into the system which controls playback of the segments in any of a number of ways. This creates flexibility not present in existing systems, permits multiple playbacks of the same title without undue duplication, permits real-time playback, and enhances reliability of the system. The system configuration also reduces the required storage, especially for variants of titles, and allows the creation of special versions by selective insertion and omission of segments.

By grouping segments of the same title on different storage devices, for example, the same title may be accessed simultaneously (or with different starting times) without being restricted by the bandwidth and control limitations of the storage device. For particularly important titles or titles which are of broader appeal, multiple copies of the segment groups will increase reliability by insuring that the required segments will be available.

The system comprises multiple storage media, such as disk drives, from which the segments of the digitized data can be retrieved. A controller with appropriate logic controls the access and transfer of the segments from the drive to the output for distribution to customers. The controller insures that the correct segments, whether from a single drive or multiple drives, are sent to the output in proper sequence and at the proper times from one of the storage devices.

The logic also controls the generation of variants. For example, a commercial message segment may be inserted into a movie by judicious mixture of segments. Multiple plays of a common title at a few minutes interval can be accommodated by accessing segments from a first drive for the first few minutes of data, then accessing data from another drive for the next few minutes, while also reaccessing the first few minutes from the first drive.

Finally, a frequency rating scheme allows a given title to be rated for importance and reuse. For higher frequency ratings, more copies of the title's segment will be stored, and the rating will also suggest whether the storage will be on one or more drives. For very high ratings, segments will be stored on drives served by different controllers as well. In some cases storage devices of different kinds will be used since different kinds of video content will have different characteristics.

### Brief Description of the Drawings

A more complete understanding of the invention may be obtained from consideration of the following description in conjunction with the drawings in which:
FIG. 1 is a block diagram of an exemplary embodiment of an interactive video server that stores and plays segmented video data according to an exemplary embodiment of this invention;
FIG. 2 is a block diagram of movie segments according to prior art storage systems;
FIG. 3 is a block diagram of a storage system according to an exemplary embodiment of this invention, as it is stored on the video server of FIG. 1;
FIG. 4 is an exemplary abstraction of contents of a movie according to FIG. 3; and
FIG. 5 is an exemplary content graph of one version of the content of FIG. 4.

### Detailed Description

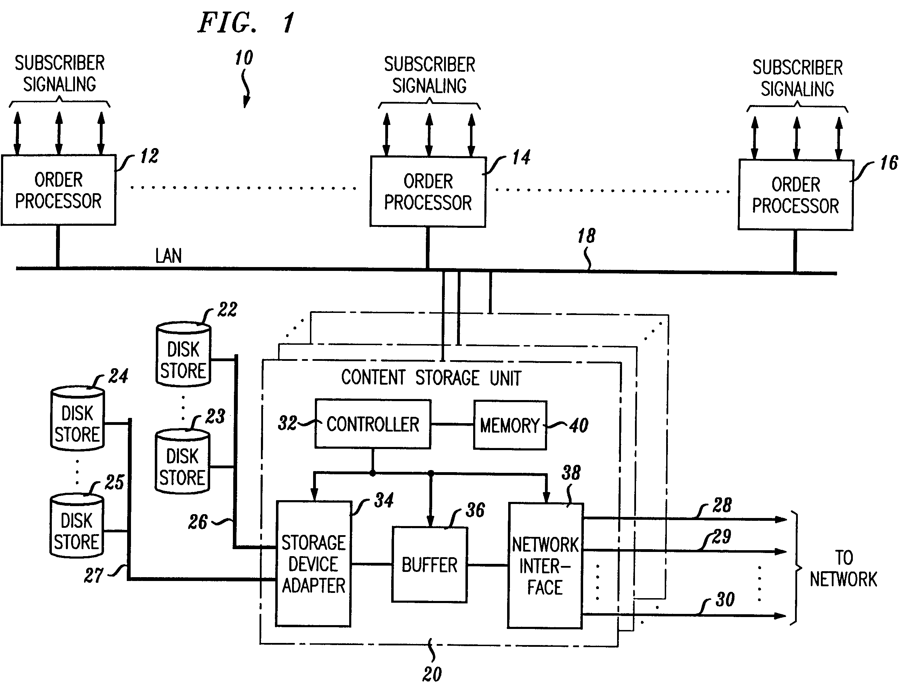

FIG. 1 shows an interactive video server 10 according to an exemplary embodiment of this invention, which can store and play back segmented video data. For purposes of describing this invention, "video" and "video data" mean the video data necessary to reproduce a movie, television. show, or other video content digitally. The word "content" may also be used herein to mean such video data. The interactive video server 10 of this exemplary embodiment is envisioned to support enhanced pay-per-view (EPPV) and video on demand (VOD). Interactive video server 10 provides video programs (i.e., movies or other program material) to a plurality of subscribers. These subscribers may order programs by signaling to the system which program they want, and, in VOD, may stop, pause, fast forward, rewind or change the program via the same signaling channels. In response to subscriber requests, interactive video server 10 directly accesses long-term memory units and provides digitally encoded video data to a subscriber network for transport to its destination.

In the interactive video server 10 of the exemplary embodiment of this invention, there are a plurality of order processors represented by 12, 14, and 16, which receive subscriber signaling and return confirmation or other data to the subscriber. Order processors 12, 14, and 16 determine the storage location of the requested program and the destination address of the subscriber and sends that data on a local area network (LAN) 18. In this exemplary embodiment, LAN 18 is an Ethernet LAN, as is well known in the art. LAN 18 provides communication among order processors 12, 14 and 16, and a plurality of content storage units, represented by content storage unit 20.

Order processors 12, 14, and 16 may be computers with CPUs, main memory and I/O devices as known in the art. Alternatively, order processors 12, 14, and 16 may be input/output devices for receiving signaling and are part of a larger, distributed computer. In this case, there would also be a CPU (not shown) connected to LAN 18. A main memory unit (not shown) may be connected to the CPU, or to LAN 18. Content storage unit 20 is separate and distinct from these other units and operates independently from order processors 12, 14, and 16, and any other computer on LAN 18.

Content storage unit 20 provides access of long-term memory units represented by disks 22-25, which store packetized audio and video signals conforming to the motion picture experts group (MPEG-2) standard, in a manner that will be described further, below, according to this exemplary embodiment. Content storage unit 20 is connected to disks 22-23 via bus 26 and to disks 24-25 via bus 27. Generally, there may be a maximum of 14 disk drives attached to each bus 26, 27, but only two each are shown for clarity. Content storage unit 20 delivers such data to a plurality of network links represented by 28, 29, and 30. These links may connect content storage unit 20 to other units, to a network, or to individual subscribers.

Content storage unit 20 comprises a controller 32 which is connected to LAN 18 and, thus, is in communication with order processors 12, 14, and 16. Controller 32 administers the request for video service received from LAN 18 and configures storage device adapter 38, buffer 36, and network interface 38 to deliver data from storage devices 22-25, to network links 28-30. Storage device adapter 34 causes access of storage devices 22-25, and moves data retrieved from the storage devices into buffer 36. Network interface 38 removes data stored in buffer 36 and delivers the data to network links 26, 28, and 30. Memory 40 is connected to controller 32 to store operational programs and other data used by controller 32 to access content on disks 22-25 and play it out to network interface 38, as will be described further, below.

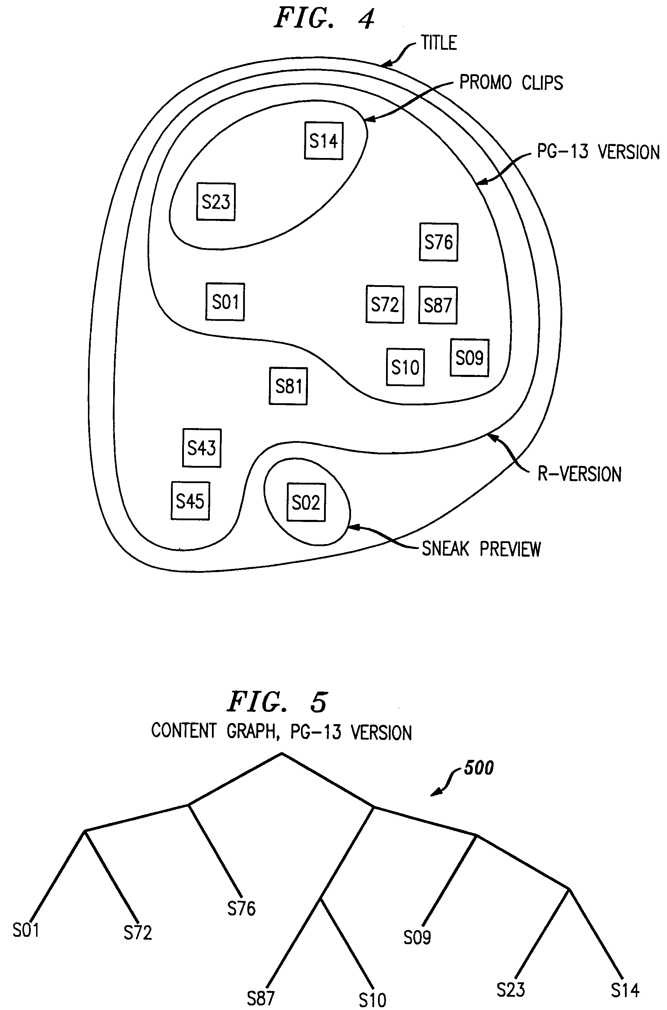

As orders arrive at order processors, for example, order processor 12, it performs a lookup in a database (not shown) to determine which of the plurality of content storage units 20 is associated with the desired programmatic material. Order processor 12 determines how to play out the desired programmatic material according to information about the order, customer, and content. A tree structure, as will be described below in connection with FIG. 5 is then derived. This tree structure specifies the manner in which the segment groups of the content are to be assembled and played. Order processor 12 then puts an identification of the desired programmatic material, the derived tree structure, and the destination address of the subscriber into a message and sends it on LAN 18 to the appropriate content storage unit, in this example, content storage unit 20.

Controller 32 in content storage unit 20 receives the program request and determines how the program is stored on the plurality of storage devices 22-24, by consulting data stored in memory 40 according to the tree structure (described below in relation to FIG. 5) sent to it by order processor 12. Controller 32 then sets up a channel for the program in order to route the programmatic material through content storage unit 20 to a network link, for example, 28. The programmatic material data is then read from a device, for example disk store 22, into buffer 36. Network interface 38 then removes the data from buffer 36, formats the data for transmission on network link 28 and sends the data onto the network link.

Additionally for VOD, order processor 12 may receive commands to stop, pause, fast-forward or rewind the program. Order processor 12 places these commands into a message and sends the message on LAN 18, which message is then received by controller 32. Controller 32 updates its table and causes the content storage unit to take the appropriate action. Video server 10 is more fully described in S. V. Makam, U. S. patent application number 08/175,877, which is incorporated herein by reference.

Busses 26 and 27 are, in this exemplary embodiment, SCSI busses. As is known in the art, SCSI busses have a maximum bandwidth of approximately 80MBps. Further, SCSI devices such as disk stores 22-25 have a maximum bandwidth of approximately 20MBps. It is anticipated that movies will be played back at approximately 3MBps each (although 1.5MBps has also been suggested). At 3MBps, a disk can, therefore, handle approximately six different contents at any given time (thus yielding a bandwidth utilization of approximately 18MBps). At other playback rates, for example, 1.5MBps, the number of plays would change (for example, thirteen plays are possible at 1.5MBps). However, this exemplary embodiment envisions a 3MBps playback rate.

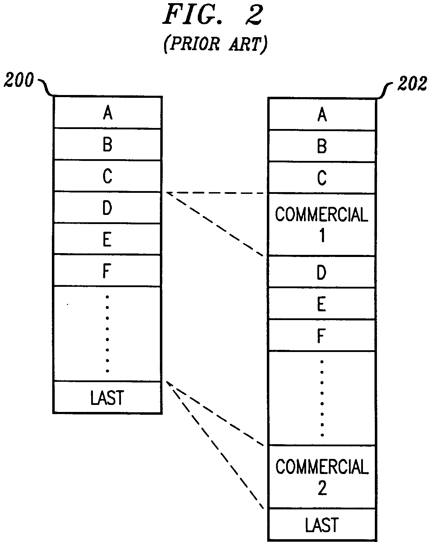

Turning now to FIG. 2, a prior art storage structure for video content for a video program is shown. In the prior art, it is known to store portions of movie or other video content in discrete packets as described by MPEG-2 transport stream packets. Such packets encode data representative of picture and audio content, as is known in the art, and defined in the MPEG-2 standard. Such packets are combined into frames which comprise a header block and a plurality of packets, which in this case, is usually four. Such frames are represented by the letters A-B-C, etc., through last, in column 200. As stated above, a digitally encoded movie comprises approximately 4 gigabytes of data. Therefore, column 200 represents approximately 4 gigabytes of data in a storage medium. It is known that this storage medium could be magnetic tape, digital tape, or a form of CD-ROM. Further, if one of these media is transferred to a disk, such as SCSI disk 22-25 of FIG. 1, it would be stored within the disk as the monolithic block 200.

It is further known in the art to add commercials to such a movie 200. Logical breaks must be found, such as shown in column 202, wherein commercial 1 is inserted after frame C, and commercial 2 is inserted before the last frame. If such commercials are each 6 megabytes long, then column 202 represents four gigabytes, plus 12 megabytes, which would also have to be stored on disks 22-25 of FIG. 1. Since each disk media, such as 22, FIG. 1, is limited to approximately 6 VOD viewers at any given time, only 6 end users could access movie 200 if it were on a disk system such as SCSI disk 22 of FIG. 1. Furthermore, a version with commercials, such as 202, which takes up more space than version 200 would have to be stored in addition to the commercial-free version 200. Additionally, commercial versions cannot custom fit commercials to potential audiences, because such commercials have to be interspersed with the frames before storage.

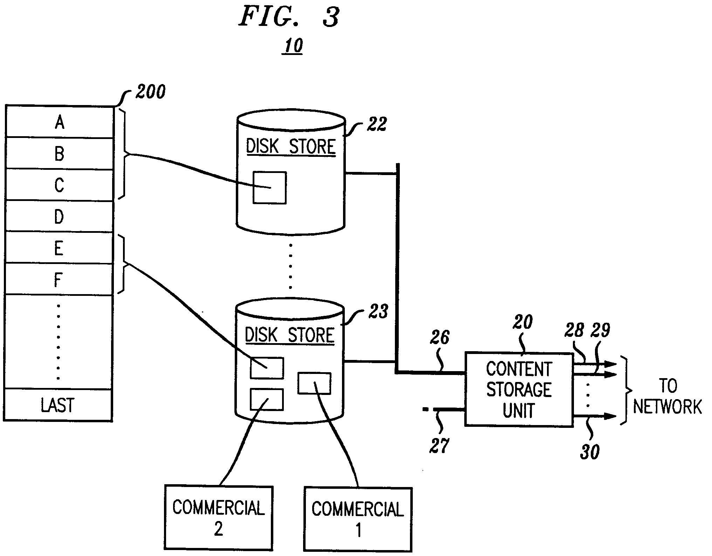

This problem is solved, as illustrated in FIG. 3, by taking a movie such as 200 and breaking it into segment groups such as A-B-C, which segment is stored on disk 22, and group D-E-F, further, which segment is stored on disk 24. Furthermore, commercials 1 and 2 may be stored on disk 24. Likewise, the rest of movie 200 may be grouped on disks 22-25 of video server 10, according to the exemplary embodiment of this invention. In this manner, there may be multiple showings of the same movie beginning at short time intervals (for enhanced payper-view). For example, if the segment comprising frames A, B, and C take approximately 10 minutes to play, then contents of A, B, and C are moved from disk 22 in through content storage unit 20 and out to the network. Immediately following C, content storage unit 20 causes disk 24 to move data from the segment comprising frames D, E, and F into content storage unit 20 and out to the network. Simultaneously, six new deliveries of the segment comprising frames A, B, and C may be started to a second set of subscribers along with the playback of the segment comprising frames D, E, and F to the first set of subscribers. This may continue for as long as is desired, with a new showing of a popular movie starting every ten minutes, for example, as would be now possible in enhanced pay-per-view.

Additionally, selected commercials may be interspersed, depending on the content tree or graph, defined by the order processor and discussed further below. Such commercials may be custom tailored to an audience (known according to demographics and stored in the order processing database) and may be interspersed before or after a particular segment is played without having to have an additional copy of movie 200.

An application of the above system may be seen in the diagram of FIG. 4. The outermost circle of FIG. 4 shows a grouping of one entire content, which would be associated with a title. A title may be, for example, a movie. The entirity of the content relating to a particular movie is within the circle labeled "title." Within this title there are several sub-groups, the organization thereof depends on the desired version of the movie. For example, there is a group defined for a sneak preview of the movie, a group for an R-rated version, a PG-rated version, and for promotional clips, as shown in each labeled circle.

Each group includes one or more of a plurality of segments defined for this particular title. Each of the groups, that is, promo clip, PG-13 version, R version, can then be defined by means of a content graph, as illustrated at 500 in FIG. 5. FIG. 5 illustrates the content graph for the PG-13 rated version of the movie of FIG. 4. Each content graph for the various versions of FIG. 4 are stored in processors 12, 14, 16, or even memory 40 of content storage unit 20 of FIG. 1. This graph defines the segments and the order in which they are to be played for a particular version of the movie. This graph may be traversed by, for example, recursive depth-first searching or other algorithm known in the art. According to graph 500, a depth-first search for this grouping of the movies would play segment S01, S72, S76, S87, S10, S9, S23, and S14 in that order. Note that these are all of the segments defined for the PG-13 version of this movie according to the grouping of FIG. 4. Thus, many different versions of the same content or even versions which combine content from multiple movies may be provided.

Additionally, commercials may be inserted after any segment in the content by adding the commercial segment or segments to tree 500 at an appropriate node. Commercial content can then be targeted to a specific audience. The order processor 12, 14, or 16 determines any required demographic information, and then determines which commercials are appropriate for that demographic population, selects a content graph based on the order information, and alters the content graph for this specific audience. Thus, this exemplary embodiment of this invention permits a content of each content to be stored in a minimum amount of space, yet provides multiple versions of the content, both with and without commercials, which themselves can be custom tailored to the audience.

As stated above, SCSI busses 26 and 27 have a large bandwidth and can handle up to fourteen devices (hard disk) on each of the busses. Hard disk devices (22-25), however, have a much lower band width and can handle at least six simultaneous plays of a content (at 3MBps per play). If the same content were grouped onto two disks, 22 and 23, for example, then the potential number of plays of that content are doubled. Not only are the number of plays increased for that content, but the interactive video server 10 is more reliable if one or more of the hard disks fail. In the event of a disk failure, interactive video server 10 can still provide the delivery of the desired content to other customers from other disks on the system, since that content is duplicated on other disks, as long as the disk on which it is duplicated has the necessary bandwidth available (at least 3MBps available) to continue playing that content.

In FIG. 3, assuming two disks 22 and 23, and two copies of movie 200 stored on these disks (two "groups"), all content storage unit 20 needs to do is to provide to two file pointers, one to each disk, for a particular showing of the movie 200, in order to recover from a disk failure. In this example, if disk 22 crashes while playing out movie 200, content storage unit 20 switches from the file pointer pointing to the content on disk 22 to the other file pointer pointing to disk 23 and continue to play out the content for movie 200 without any interruption (assuming that disk 23 still has at least 3MBps of bandwidth available). This recovery is made possible because content storage unit 20 hardware allows it to reuse all of the resources necessary to continue playing out movie 200.

To optimize the playing of contents, each content is assigned a frequency number. This number indicates how important the content is. The frequency number is used to define the number of copies of that content to be stored on a specific disk.

Assume a frequency number between 0 to 100. 0 means that there is no interest in that content, and 100 means that content is very important and should be stored on a disk of its own to optimize the maximum simultaneous plays for that content. To better explain this, assume two contents: A and B. Each hard disk can provide 10 simultaneous plays, wherein a frequency number of 10 specifies that one simultaneous play is needed. A 20 means 2 plays simultaneously and so on. If it is predicted (prediction can be made about a movie by the number of viewers that saw that movie when it first came out) that 4 customers (frequency number 40) will be interested in movie A simultaneously, and six in movie B (frequency number 60), content A and B can be stored on the same disks (total frequency number of 100), which utilizes the full bandwidth of that disk.

For disks which contain more than one content, the frequency number of the different contents should add up to no more than 100 to guarantee ten simultaneous plays per disk. The application processor informs the content storage unit this number when requesting to copy contents to hard disks.

The assigned frequency number may be greater than 100 in order to increase the number of simultaneous plays for that content or to increase the reliability of that content. For example, if 40 simultaneous showings of a content are desired, the frequency number is 400, which means that this particular content should be duplicated on four different disks (again assuming that each disk can provide a maximum of 10 plays each). It is also possible that a single content may expand more than one hard disk. In case such as this, the content storage unit treats these disks as one disk. For a frequency number of 140, one copy of that content may be put on two disks. A different content with a frequency number of 60 or less could be placed on one of the two disks.

Returning to FIG. 1, the following algorithm describes how content storage unit 20 manages the buffers and file pointers to maintain a constant stream of data out to the network. If there is a second copy of a movie, it is kept track of via a second file descriptor. Also, at least two files are kept open, one file containing the current segment being played and one file containing the next segment, so there is no delay in switching to the next segment. Thus, each time a segment is finished, the next one is already opened and the following segment is then opened in the background.

SeamLess(SegList, StartTime) determine busses for desired segment list, and the number of segments calculate bandwidth needed for this content if bandwidth available, continue, else notify order processor 12, 14, or 16.

Open first segment on disk and any extra copies for recovery purposes, obtain file pointers (file pointer list keeps track of which copy is active).

Read part of segment to fill buffer; if read error, try second copy, if available

For VOD, check for segment operation messages (fast forward, pause, play, rewind, stop).
If fast forward, set file pointer list to next file pointer list, do a background open next segment, set next file pointer list in backup copies
If pause, clear buffers and halt transmission of ATM resources
If play, go to top of loop
If rewind, set file pointer list to previous file pointer list. Set previous file pointer list in backup copy. Open previous segment
If stop, exit loop.
If end of segment, then set file pointer list to next file pointer list, do a background open of next segment, and set that to next file pointer list. End loop.

For enhanced pay-per-view, where contents are delivered to the customer without customer intervention, there is an advantage to dividing the content into groups. Each group may be one or more segments. If the running time of a movie is, for example, two hours long, the movie is divided into twelve segment groups of ten minutes each. Thus, more than ten simultaneous plays of the same movie can be provided, if scheduled ten minutes apart. This grouping works for EPPV because there is no customer intervention for the offering of the movie which allows the content storage unit to share its resources. This grouping does not work for VOD, since most customer orders will not be exactly ten minutes apart. And to guarantee the completion of a content, the bandwidth on all the disk needs be to allocated (not shared) prior to showing the content.

In VOD, near the completion point of a content being shown, customer intervention is usually disallowed, so that the content storage unit can calculate the correct time to start playing out another content if needed. Once the time is determined, the content storage unit can share the resources it has already set up to play out a new content seamlessly.

It is to be understood that the above-described embodiments are merely illustrative principles of the invention, and that many variations may be devised by those skilled in the art, without departing from the scope of the invention. It is, therefore, intended that such variations be included within the scope of the claims.

## Claims

1. Video storage apparatus for storing data representative of a plurality of video items, the data for each item being divided into segments, said apparatus comprising
data storage means for storing said segments in a plurality of groups,
means for storing a decision tree defining various combinations of said segments,
means for delivering segments collectively to a network in response to requests and in accordance with the content of said decision tree.

2. Method for playing video programs stored as digitized data in a plurality of storage media, under control of at least one controller, said method comprising the steps of:
requesting a specific program, accessing a first of said plurality of storage media and reading data therefrom corresponding to a first portion of said specific program, delivering data from said first storage medium to a network, said controller receiving a notice that said first storage media is nearing the end of its data for said specific program, in response to said notice, determining whether there are additional parts to said specific program and if there are, accessing a second of said plurality of storage media, delivering to said network data from said second storage medium immediate after the end of the data from said first medium.
